# FASCICULE DE BREVET EUROPEEN

(11) **EP 2 525 988 B1**
(45) Date de publication et mention de la délivrance du brevet: **27.08.2014**
(21) Numéro de dépôt: 11700353.3
(22) Date de dépôt: 18.01.2011
(51) Int. Cl.: B60C 11/04, B60C 11/13

(54) **BANDE DE ROULEMENT DE PNEU COMPRENANT UN DISPOSITIF RÉDUCTEUR DE BRUIT AMÉLIORE**
REIFENLAUFFLÄCHE MIT VERBESSERTER GERÄUSCHSREDUKTIONSVORRICHTUNG
TIRE TREAD INCLUDING AN IMPROVED NOISE REDUCTION DEVICE

(30) Priorité: 19.01.2010 FR 1050313
(43) Date de publication de la demande: 28.11.2012
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: DAUTREY, Nicolas, F-63400 Chamalieres (FR); SHIMANAKA, Nanae, Gunma 373-8668 (JP)
(74) Mandataire: Diernaz, Christian
(86) Numéro de dépôt international: PCT/EP2011/050587
(87) Numéro de publication internationale: WO 2011/089107

(56) Documents cités:
- EP-A1- 0 908 330
- DE-A1- 4 403 662
- GB-A- 2 450 723
- JP-A- 5 155 203

## Description

### DOMAINE DE L'INVENTION

La présente invention concerne une bande de roulement pour pneu, cette bande de roulement étant pourvue d'un dispositif flexible permettant d'atténuer le bruit produit par la mise en résonance de l'air circulant dans les rainures d'orientation générale circonférentielle.

### ART ANTÉRIEUR

Il est connu que le passage dans le contact d'un pneu en roulage sur une chaussée génère une circulation d'air dans un tuyau formé par une rainure d'orientation générale circonférentielle et la chaussée elle-même, ce tuyau étant ouvert à ses deux extrémités. L'air dans ce tuyau forme une colonne d'air en vibration dont la fréquence de résonance dépend de la longueur entre les deux extrémités du tuyau et en conséquence de la longueur de rainure dans le contact avec la chaussée.

Cette résonance de l'air dans les rainures a comme conséquence de générer, dans un véhicule pourvu avec ces pneus, un bruit à l'intérieur du véhicule et un bruit à l'extérieur du véhicule.

Ces bruits intérieur et extérieur correspondent le plus souvent à une fréquence voisine de ou égale à 1 kHz correspondant à une fréquence particulièrement sensible à l'oreille humaine. Afin de réduire un tel bruit de résonance, il est connu de disposer, dans chaque rainure d'orientation circonférentielle ou globalement circonférentielle, une pluralité de membranes de fermeture relativement peu épaisses en matériau caoutchoutique, chaque membrane de fermeture occupant toute la section de la rainure ou à tout le moins une grande partie de cette section. Chaque membrane de fermeture peut s'étendre à partir du fond de la rainure ou être fixée à l'une au moins des parois délimitant ladite rainure. Par relativement peu épaisse, on entend que chaque membrane de fermeture est apte à fléchir pour ouvrir la section de la rainure sous un flux de liquide notamment lors d'un roulage par temps de pluie.

Grâce à ces membranes de fermeture, la longueur de la colonne d'air dans chaque rainure circonférentielle est réduite par rapport à la longueur totale de la rainure dans le contact, ce qui conduit à un changement de la fréquence de résonance. Le déplacement de fréquence se fait vers des valeurs de fréquences de résonance moins sensibles à l'oreille humaine.

Bien entendu, pour conserver la fonction de drainage de l'eau, en cas de roulage sur chaussée revêtue d'eau, il est nécessaire que cette membrane puisse fléchir d'une façon appropriée sous l'action de la pression de l'eau et ainsi ouvrir la section de la rainure. Il a été proposé plusieurs solutions de ce type pour réduire la résonance de la colonne d'air en vibration dans les rainures.

Une telle façon de faire est par exemple décrite dans le document de brevet EP0908330 B1 et notamment avec la figure 4a de ce brevet. Autres solutions sont connues des documents DE-A1-44 03 662, EP-A1-0 908 330, GB-A-2 450 723 et JP-A-5 155 203.

Toutefois, il a été constaté que pour certains pneus ayant une bande de roulement formée dans un matériau caoutchoutique de dureté shore A très élevée, la mise en oeuvre de cette solution de l'art antérieur conduit à plusieurs inconvénients.

Un de ces inconvénients est lié au fait que pour obtenir une membrane très flexible, afin de conserver de bonnes propriétés d'écoulement de l'eau par temps de pluie, il fallait réduire l'épaisseur de cette membrane compte tenu de la dureté shore A très élevée du matériau formant la bande de roulement.

Un autre inconvénient, se combinant d'ailleurs à l'inconvénient précédent, est lié au fait que le moulage de cette membrane très peu épaisse est rendu plus difficile. En effet, le remplissage par le matériau cru dans les creux formés à cet effet dans le moule pour mouler chaque membrane est difficile voire impossible en totalité. Il se produit en effet un blocage de la matière qui vulcanise avant même d'avoir complètement rempli l'espace prévu pour mouler cette membrane, cette vulcanisation résultant de la très faible épaisseur de la membrane. Par conséquent, on n'obtient, avec un matériau de haute dureté shore A, qu'une membrane de fermeture ne bouchant que partiellement la section de la rainure à l'intérieur de laquelle cette membrane de fermeture est formée. Il en résulte un défaut de moulage qui conduit à un bruit de résonance non totalement réduit quand le pneu est neuf.

### Définitions

Une rainure est un espace volumique délimité par des parois de matière en vis-à-vis, ces parois de matière se raccordant par un fond de rainure. Une rainure a une largeur correspondant à la distance moyenne séparant les deux parois de matière en vis-à-vis et une profondeur mesurant sensiblement la hauteur desdites parois. Les parois en vis-à-vis d'une rainure ne viennent pas en contact l'une sur l'autre dans les conditions d'usage normales d'un pneu.

Empreinte de contact d'un pneu : lors du roulage d'un pneu sous ses conditions d'usage nominales de jante de montage, de pression et de charge (telles que définie dans des normes telles que l'E.T.R.T.O., la J.A.T.M.A. ou la T.R.A.), il se forme une zone de contact (ou empreinte de contact) entre le pneu et la chaussée.

La dureté shore A des compositions de caoutchouc après cuisson est mesurée selon la norme ASTM D2240 de 1997.

Dans la présente demande, un matériau est dit de haute dureté shore A si sa dureté shore A est au moins égale à 65.

L'objectif de l'invention vise à fournir une solution d'une bande de roulement pour un pneu, cette bande de roulement étant faite dans un matériau de haute dureté shore A dont les rainures d'orientation générale circonférentielle sont pourvue avec des membranes de fermeture réduisant les bruits de résonance tout en conservant une bonne performance de drainage de l'eau par temps de pluie, ces membranes de fermeture pouvant être moulées sans présenter les inconvénients des membranes de fermeture de l'art antérieur.

### RÉSUMÉ DE L'INVENTION

Pour remplir cet objectif, il est proposé une bande de roulement pour pneu, cette bande de roulement étant faite dans un matériau de haute dureté shore A, c'est-à-dire ayant une dureté au moins égale à 65, cette bande de roulement ayant au moins une rainure d'orientation générale circonférentielle ayant une profondeur D et une largeur W, cette rainure étant délimitée par deux parties de bande de roulement en vis-à-vis raccordées entre elles par un fond de rainure. Il est en outre formé dans au moins une rainure d'orientation générale circonférentielle une pluralité de membranes de fermeture destinées à fermer chaque rainure circonférentielle sur au moins 50% de la section de la rainure, ces membranes de fermeture ayant une épaisseur au plus égale à 2 mm et étant aptes à fléchir lors d'un écoulement de liquide. Cette bande de roulement est telle que les membranes de fermeture sont formées dans un matériau ayant une dureté shore A au plus égale à 62, cette dureté shore A étant inférieure à la dureté shore A de la bande de roulement.

Un procédé de moulage d'une telle structure a été décrit dans une demande de brevet déposée en 2009 et portant sur un dispositif amovible de moulage d'une paroi flexible dans une rainure d'une bande de roulement d'un pneumatique. Cette demande (publiée le 23/12/2010 sous le numéro WO 2010/146180) décrit un moule, du type comprenant des éléments de garniture disposés circonférentiellement, et destinés à former la sculpture de la bande de roulement du pneumatique, ces éléments de garniture comportant des cordons destinés à former l'empreinte des rainures de la sculpture. Ce moule comprend en outre un ou plusieurs inserts comportant chacun un corps solidaire de la garniture et une tête. Ces inserts comportent une entaille ou une ou plusieurs réservations pratiquées sur l'une ou l'autre des faces de l'insert, destinées à contribuer au moulage d'une membrane flexible de faible épaisseur articulée à au moins une des parois du sillon. Ces inserts sont disposés dans au moins un des cordons, de sorte que ladite entaille ou ladite réservation soient placées sensiblement perpendiculairement à la direction longitudinale du sillon.

Avantageusement l'écart entre les duretés shore A du matériau constituant la bande de roulement et du matériau formant les membranes de fermeture est au moins égal à 10 points.

Avantageusement, chaque membrane de fermeture ferme une rainure sur au moins 90% de sa section transversale.

Cette combinaison de matériaux de duretés shore A spécifiques permet d'obtenir par moulage des membranes de faible épaisseur (au plus égale à 2 mm) occupant toute la section désirée de la rainure et qui après vulcanisation peuvent fléchir facilement sous l'effet d'une pression d'un liquide circulant dans les rainures.

De façon préférentielle, les membranes de fermeture sont reliées au fond de la rainure, c'est-à-dire qu'elles font corps avec le matériau formant au moins en partie le fond de la rainure. Avantageusement, le matériau formant le fond de la rainure, c'est-à-dire le matériau s'étendant sur une profondeur au moins égale à 1mm à partir du fond de la rainure, est distinct du matériau formant la bande de roulement et a une dureté shore A inférieure à la dureté shore A du matériau de la bande de roulement et au plus égale à 62.

Par formant au moins en partie le fond d'une rainure, on entend un matériau qui peut s'étendre dans la direction circonférentielle sur toute la longueur circonférentielle de cette rainure ou encore seulement de part et d'autre de chaque membrane de fermeture sur une longueur inférieure à la distance séparant deux membranes de fermeture dans ladite rainure.

Ce matériau en fond de rainure peut être identique à celui formant les membranes de fermeture ou encore avoir une dureté shore A intermédiaire entre la dureté du matériau formant la bande de roulement et celle du matériau constituant les membranes de fermeture afin d'éviter une concentration d'effort à la jonction des membranes de fermeture et du fond des rainures.

L'épaisseur de chaque membrane de fermeture est au moins égale à 0.2 mm et au plus égale à 2.0 mm pour un pneu équipant un véhicule de tourisme. Préférentiellement, chaque rainure est fermée au moins sur 50% de sa section transversale et encore plus préférentiellement sur au moins 70%.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES DESSINS

Dans ces dessins :
La figure 1 montre, vue en plan, une partie d'une bande de roulement selon l'invention, cette partie formant l'empreinte de contact avec une chaussée ;
La figure 2 montre une coupe locale de la bande de roulement de la figure 1, cette coupe étant réalisée suivant la ligne II-II ;
La figure 3 montre la même coupe que celle de la figure 2 dans une configuration de roulage sur chaussée revêtue d'eau ;
La figure 4 montre une vue partielle en plan d'une variante de bande de roulement selon l'invention, selon laquelle le matériau formant le fond de rainure de part et d'autre de chaque membrane de fermeture est différent du matériau de la bande de roulement ;
La figure 5 montre en coupe selon la ligne V-V réalisée sur la figure 4;
La figure 6 montre en coupe une autre variante de bande de roulement selon l'invention ;
La figure 7 montre une autre variante de l'invention.

### DESCRIPTION DÉTAILLÉE DES FIGURES

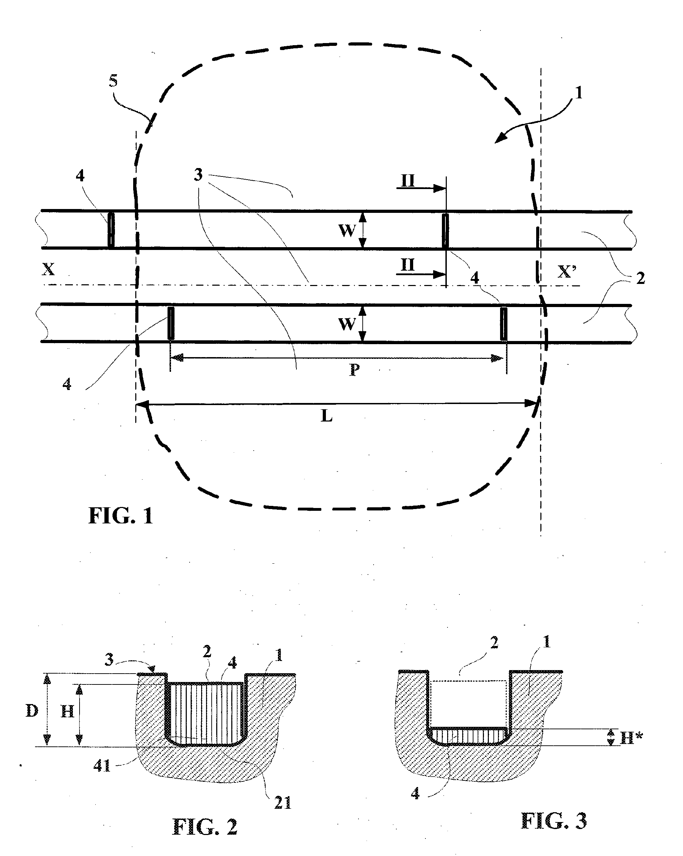

La figure 1 montre une vue en plan d'une bande de roulement 1 équipant un pneumatique de dimension 225/55 R 16. La bande de roulement 1 montrée est pourvue de deux rainures principales 2 rectilignes et d'orientation circonférentielle (cette direction est indiquée sur la figure par l'axe XX'). Les rainures circonférentielles ont une largeur moyenne W égale à 10 mm, et une profondeur D (visible sur la figure 2) égale à 8 mm. Cette bande de roulement comprend une pluralité d'éléments dont les faces externes forment une surface de roulement 3 destinée à venir en contact avec une chaussée lors du roulage.

Sur cette figure 1, on a superposé, en traits pointillés, le contour 5 de l'empreinte de contact avec la chaussée lorsque ce pneu est soumis à ses conditions d'usage nominales, à savoir une pression de gonflage égale à 2.5 bars et une charge égale à 677 daN. Dans l'exemple présent, la longueur moyenne L de l'empreinte de contact avec la chaussée est égale à 143 mm.

Dans chaque rainure principale 2 passant dans le contact avec la chaussée pendant le roulage, une colonne d'air se forme qui entre en vibration et entre en résonance à une fréquence fonction de la longueur de la colonne d'air. Pour modifier la fréquence de résonance de chaque colonne d'air on réduit cette longueur. C'est la raison pour laquelle on dispose dans chaque rainure circonférentielle 2 une pluralité de membranes de fermeture 4 pour fermer chaque rainure. La distance moyenne P entre les membranes de fermeture est inférieure à la longueur L de l'empreinte de façon à avoir toujours au moins une membrane de fermeture présente dans le contact pour chaque rainure. Dans le cas présenté, chaque membrane de fermeture 4 s'étend à partir du fond de la rainure 2 et sur une hauteur égale à 7.5 mm. L'épaisseur de ces membranes de fermeture 4 est égale dans le cas présent à 0.8 mm.

Dans le cas présent, les membranes de fermeture 4 de rainure sont formées dans un matériau ayant une dureté shore A égale à 35. Le matériau formant la bande de roulement a une dureté shore A égale à 67.

La figure 2 montre une coupe locale de la bande de roulement de la figure 1, cette coupe étant réalisée suivant la ligne II-II.

Sur cette figure 2, on voit que les membranes de fermeture 4 sont en position non fléchie et ferment la section des rainures 2 sur au moins 80% de la section desdites rainures. Sur cette figure 2, on voit que la membrane de fermeture 4 a une base 41 liée au fond 21 de la rainure 2 jusqu'à une hauteur H qui, dans le cas présent, est égale à 93% de la profondeur D de la rainure 2. Par ailleurs cette membrane de fermeture 4 occupe sensiblement toute la largeur de la rainure 2 en ménageant toutefois un jeu approprié pour permettre un fléchissement aisé d'une telle membrane de fermeture 4 lorsqu'un flux de liquide circule dans cette rainure.

Dans une configuration de roulage sur chaussée sèche, la seule circulation d'air ne permet pas de fléchir les membranes de fermeture 4 et en conséquence ces dernières ferment les rainures pour diminuer les longueurs de colonne d'air en vibration comme cela est montré avec la figure 2.

La figure 3 montre une coupe réalisée au même endroit que la coupe utilisée pour la figure 2 lorsque le pneu roule sur une chaussée recouverte d'eau. Sur cette figure 3, on voit que la membrane de fermeture 4 a fléchi au passage dans le contact laissant ainsi s'écouler l'eau. Grâce à la plus grande élasticité et à la plus grande flexibilité du matériau constituant les membranes de fermeture 4 comparativement au matériau de base de la bande de roulement, il est possible d'avoir une flexion suffisante des membranes de fermeture pour obtenir un écoulement de l'eau et ainsi limiter les risques d'aquaplaning. Une fois fléchie chaque membrane prend une hauteur H* à partir du fond 21 de la rainure, cette hauteur H* étant d'autant plus petite que la membrane de fermeture a une petite épaisseur (dans le cas présent cette épaisseur est égale à 0.8 mm). Cette hauteur H* est d'autant plus réduite que le matériau formant la membrane de fermeture est de faible dureté shore A.

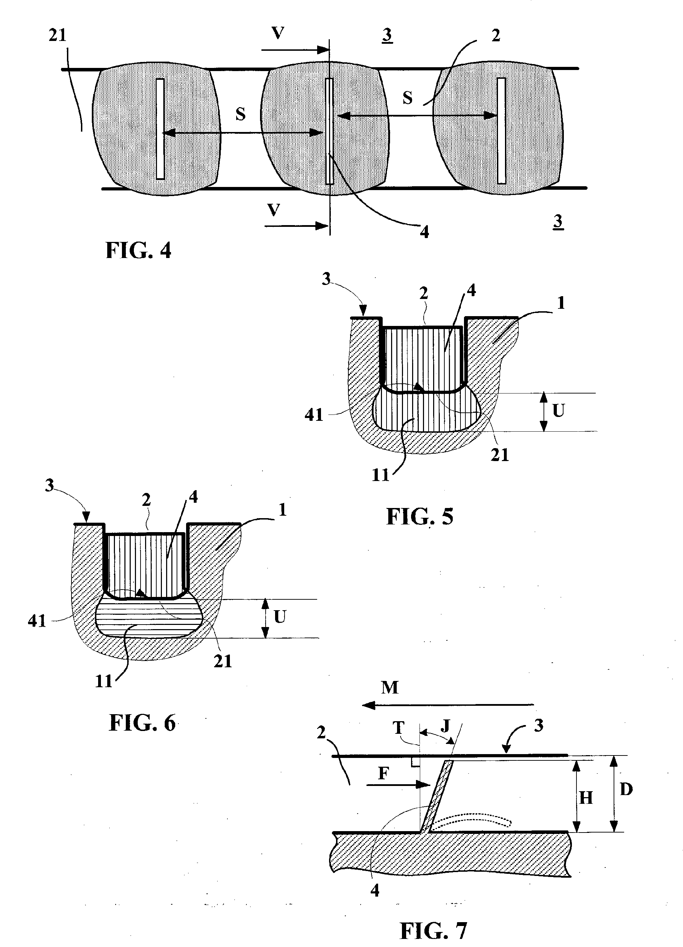

La figure 4 montre une vue partielle en plan d'une variante de bande de roulement selon l'invention, selon laquelle le matériau formant le fond 21 de rainure de part et d'autre de chaque membrane de fermeture 4 est différent du matériau constitutif de la bande de roulement.

Dans cette variante, chaque membrane de fermeture 4 comprend une base 41 (visible sur la figure 5) qui est reliée au fond 21 des rainures 2. La figure 4 montre que circonférentiellement de part et d'autre de la membrane de fermeture 4, le fond 41 de la rainure est formé dans un matériau qui est identique au matériau constituant la membrane de fermeture 4. L'intérêt d'une telle structure est de faciliter le moulage des membranes en étant certain que la base des membranes est bien formée dans un matériau de faible dureté shore A. Un autre avantage réside dans une meilleure flexibilité des membranes autour de leur base.

La figure 5 montre en coupe selon la ligne V-V réalisée sur la figure 4. sur cette figure 5 on voit que dans l'épaisseur de la bande de roulement à partir du fond 41 de la rainure 4, le matériau formant la membrane de fermeture 4 se prolonge par un même matériau 11 sur une épaisseur (U) au moins égale à 1 mm, cette épaisseur étant mesurée par rapport au fond 21 de la rainure.

Dans une autre variante montrée avec la figure 6, la bande de roulement 1 est réalisée dans un matériau de dureté shore A égale à 70, ce matériau formant la surface de roulement 3 de cette bande. Chaque membrane de fermeture est réalisée dans un matériau de dureté shore A égale à 50 et est liée par sa base 41 au fond 21 de la rainure 2. Pour assurer la liaison entre chaque membrane de fermeture 4 et la bande de roulement 1, la partie 11 située au dessous du fond de rainure 41 et d'épaisseur U est formée dans un matériau de dureté shore A intermédiaire entre les duretés des matériaux de bande de roulement et de membranes de fermeture. Dans le cas présent, la dureté shore A du fond de rainure 41 est égale à 60.

La figure 7 montre une autre variante de l'invention suivant laquelle toutes les membranes de fermeture 4 sont réalisées dans un matériau ayant une dureté shore A au plus égale à la dureté shore A du matériau composant la bande de roulement et en outre inférieure d'au moins 10 points à la dureté shore A du matériau composant la bande de roulement. En outre, et pour faciliter encore le fléchissement des membranes de fermeture 4 sous l'effet d'un flux de liquide, ces membranes de fermeture 4 sont inclinées d'un angle **J** par rapport à une perpendiculaire **T** à la surface de roulement 3. L'orientation des membranes de fermeture 4 est telle que chaque membrane de fermeture se trouve à l'état initial - c'est-à-dire en sortie de moule de fabrication - dans le quadrant dans lequel cette membrane de fermeture 4 va fléchir sous l'effet d'un écoulement de liquide, cet écoulement se faisant dans une direction **F** opposée à la direction **M** de déplacement du pneu. Cette configuration impose bien entendu un sens de roulage préférentiel au pneu pourvu de ladite bande de roulement, ce sens de roulage préférentiel pouvant être indiqué par un dispositif visible apposé sur le pneu. Cet angle d'inclinaison **J**, mesuré par rapport à une perpendiculaire **T** à la surface de roulement de la bande de roulement est choisi préférentiellement au plus égal à 30 degrés.

L'invention n'est pas limitée aux exemples décrits et représentés et diverses modifications peuvent y être apportées sans sortir de son cadre. Notamment, ces mêmes membranes de fermeture peuvent être employées pour fermer des rainures d'orientation transversale ou oblique.

## Revendications

1. Bande de roulement (1) pour pneu, cette bande de roulement (1) étant réalisée dans un matériau caoutchoutique de dureté shore A au moins égale à 65, cette bande de roulement étant pourvue d'au moins une rainure (2) d'orientation générale circonférentielle ayant une largeur W et une profondeur D, cette rainure (2) étant délimitée par deux parties de bande de roulement en vis-à-vis raccordées entre elles par un fond de rainure (21), cette bande de roulement comprenant une pluralité de membranes de fermeture (4) formées dans au moins une rainure (2) d'orientation générale circonférentielle, chaque membrane de fermeture (4) fermant une rainure (2) sur au moins 50% de la section de ladite rainure, chaque membrane de fermeture (7), d'épaisseur moyenne au plus égale à 2 mm, étant apte à fléchir lors d'un écoulement de liquide,
cette bande de roulement (1) étant **caractérisée en ce que** les membranes de fermeture (4) sont formées dans un matériau de dureté shore A au plus égale à 62, cette dureté shore A étant inférieure à la dureté shore A de la bande de roulement.

2. Bande de roulement (1) selon la revendication 1 **caractérisée en ce que** l'écart entre la dureté shore A du matériau formant la bande de roulement et la dureté shore A du matériau formant les membranes de fermeture (4) est au moins égale à 10 points.

3. Bande de roulement selon la revendication 1 ou selon la revendication 2 **caractérisée en ce que** les membranes de fermeture (4) s'étendent dans chaque rainure (2) à partir du fond de ladite rainure (21).

4. Bande de roulement selon la revendication 3 **caractérisée en ce que** chaque membrane de fermeture (4) ferme une rainure (2) sur au moins 90% de la section transversale de ladite rainure.

5. Bande de roulement selon la revendication 3 ou la revendication 4 **caractérisée en ce que** le matériau formant le fond de la rainure (21), c'est-à-dire le matériau s'étendant sur une profondeur au moins égale à 1mm à partir du fond de la rainure, est distinct du matériau formant la bande de roulement et a une dureté shore A inférieure à la dureté shore A du matériau de la bande de roulement et au plus égale à 62.

6. Bande de roulement selon la revendication 5 **caractérisée en ce que** matériau en fond de rainure (21) a une dureté shore A comprise entre la dureté du matériau formant la bande de roulement et la dureté shore A du matériau constituant les membranes de fermeture (4).

7. Bande de roulement selon l'une quelconque des revendications 1 à 6 **caractérisée en ce que** les membranes de fermeture (4) sont toutes inclinées d'un même angle (J), cet angle (J), mesuré par rapport à une perpendiculaire à la surface de roulement de la bande de roulement, étant au plus égal à 30 degrés.

## Patentansprüche

1. Laufstreifen (1) für einen Reifen, wobei dieser Laufstreifen (1) aus einem Kautschukmaterial einer Shore-A-Härte mindestens gleich 65 hergestellt ist, wobei dieser Laufstreifen mit mindestens einer Rille (2) von allgemeiner Umfangsausrichtung mit einer Breite W und einer Tiefe D ausgestattet ist, wobei diese Rille (2) von zwei einander gegenüberliegenden Laufstreifenteilen begrenzt wird, die miteinander durch einen Rillenboden (21) verbunden sind, wobei dieser Laufstreifen eine Vielzahl von Verschlussmembranen (4) enthält, die in mindestens einer Rille (2) von allgemeiner Umfangsausrichtung geformt sind, wobei jede Verschlussmembran (4) eine Rille (2) über mindestens 50% des Querschnitts der Rille verschließt, wobei jede Verschlussmembran (4) mit einer mittleren Dicke höchstens gleich 2 mm bei einem Durchfluss von Flüssigkeit nachgeben kann, wobei dieser Laufstreifen (1) **dadurch gekennzeichnet ist, dass** die Verschlussmembranen (4) aus einem Material einer Shore-A-Härte höchstens gleich 62 geformt sind, wobei diese Shore-A-Härte geringer als die Shore-A-Härte des Laufstreifens ist.

2. Laufstreifen (1) nach Anspruch 1, **dadurch gekennzeichnet, dass** die Abweichung zwischen der Shore-A-Härte des den Laufstreifen formenden Materials und der Shore-A-Härte des die Verschlussmembranen (4) formenden Materials mindestens gleich 10 Punkten ist.

3. Laufstreifen nach Anspruch 1 oder Anspruch 2, **dadurch gekennzeichnet, dass** die Verschlussmembranen (4) sich in jeder Rille (2) ausgehend von dem Boden der Rille (21) erstrecken.

4. Laufstreifen nach Anspruch 3, **dadurch gekennzeichnet, dass** jede Verschlussmembran (4) eine Rille (2) über mindestens 90% des Querschnitts der Rille verschließt.

5. Laufstreifen nach Anspruch 3 oder Anspruch 4, **dadurch gekennzeichnet, dass** das den Boden der Rille (21) formende Material, d.h. das Material, das sich über eine Tiefe mindestens gleich 1 mm ausgehend vom Boden der Rille erstreckt, sich von dem den Laufstreifen formenden Material unterscheidet und eine Shore-A-Härte niedriger als die Shore-A-Härte des Materials des Laufstreifens und höchstens gleich 62 hat.

6. Laufstreifen nach Anspruch 5, **dadurch gekennzeichnet, dass** das Material am Rillenboden (21) eine Shore-A-Härte hat, die zwischen der Härte des den Laufstreifen formenden Materials und der Shore-A-Härte des die Verschlussmembranen (4) bildenden Materials liegt.

7. Laufstreifen nach einem beliebigen der Ansprüche 1 bis 6, **dadurch gekennzeichnet, dass** die Verschlussmembranen (4) alle um einen gleichen Winkel (J) geneigt sind, wobei dieser Winkel (J), gemessen bezüglich einer Lotrechten zur Lauffläche des Laufstreifens, höchstens 30 Grad beträgt.

## Claims

1. Tread (1) for a tyre, this tread (1) being made of a rubber material with a shore A hardness of at least 65, this tread being provided with at least one groove (2) of circumferential overall direction having a width W and a depth D, this groove (2) being delimited by two opposing tread parts joined together by a groove bottom (21), this tread comprising a plurality of closure membranes (4) formed in at least one groove (2) of circumferential overall direction, each closure membrane (4) closing a groove (2) over at least 50% of the cross section of the said groove, each closure membrane (7), of a mean thickness of at most 2 mm, being able to flex as liquid flows,
this tread (1) being **characterized in that** the closure membranes (4) are formed of a material with a shore A hardness of at most 62, this shore A hardness being lower than the shore A hardness of the tread.

2. Tread (1) according to Claim 1, **characterized in that** the difference between the shore A hardness of the material of which the tread is formed and the shore A hardness of the material of which the closure membranes (4) are formed is at least 10 points.

3. Tread according to Claim 1 or according to Claim 2, **characterized in that** the closure membranes (4) extend in each groove (2) from the bottom of the said groove (21).

4. Tread according to Claim 3, **characterized in that** each closure membrane (4) closes a groove (2) over at least 90% of the transverse cross section of the said groove.

5. Tread according to Claim 3 or Claim 4, **characterized in that** the material of which the bottom of the groove (21) is made, i.e. the material that extends over a depth of at least 1 mm from the bottom of the groove, is different from the material of which the tread is made and has a shore A hardness lower than the shore A hardness of the material of the tread and of at most equal to 62.

6. Tread according to Claim 5, **characterized in that** the material in the groove bottom (21) has a shore A hardness that is somewhere between the hardness of the material of which the tread is made and the shore A hardness of the material of which the closure membranes (4) are made.

7. Tread according to any one of Claims 1 to 6, **characterized in that** the closure membranes (4) are all inclined by the same angle (J), this angle (J), measured with respect to a perpendicular to the running surface of the tread, being at most equal to 30 degrees.
